# EUROPEAN PATENT APPLICATION

(11) **EP 3 418 690 A1**
(43) Date of publication of application: **26.12.2018**
(21) Application number: 18178085.9
(22) Date of filing: 15.06.2018
(51) Int. Cl.: G01C 21/34, G05D 1/02, G01C 21/36, G05D 1/00

(54) **RESTRICTED-USE AUTOMATED-VEHICLE NAVIGATION SYSTEM**

(30) Priority: 19.06.2017 US 201715626613
(71) Applicant: Aptiv Technologies Limited, St. Michael (BB)
(72) Inventor: LAUR, Michael, H, MISSION VIEJO, CALIFORNIA 92692 (US); HILNBRAND, Brian, R, MOUNTAIN VIEW, CALIFORNIA 94043 (US); AGARWAL, Divya, SUNNYVALE, CALIFORNIA 94086 (US)
(74) Representative: Robert, Vincent

(57) **Abstract**

A navigation system (10) for a restricted-use automated-vehicle includes a digital-map (18), a location-detector (26), and a controller (30). The digital-map (18) characterizes roadways on the digital-map (18) with a usage-rating (22). The usage-rating (22) is indicative of a minimum-value of a vehicle-rating (24) of a vehicle allowed to use each of the roadways. The location-detector (26) indicates a location (28) of a host-vehicle (12) on the digital-map (18). The controller (30) is in communication with the digital-map (18) and the location-detector (26). The controller (30) receives a destination (32) of the host-vehicle (12), and determines a route (36) from the location (28) to the destination (32) that avoids roadways with usage-ratings greater than the vehicle-rating (24) of the host-vehicle (12).

## Description

### TECHNICAL FIELD OF INVENTION

This disclosure generally relates to a navigation system for a restricted-use automated-vehicle, and more particularly relates to a system that determines a route to a destination from a location that avoids roadways with usage-ratings greater than a vehicle-rating of a host-vehicle.

### BACKGROUND OF INVENTION

Automated Mobility on Demand (AMOD) vehicles have been proposed that do not meet all government safety ratings. These AMOD vehicles are intended for use in limited situations. The use of such vehicles may be limited by speed and/or a location where such vehicles can be used.

### SUMMARY OF THE INVENTION

In accordance with one embodiment, a navigation system for a restricted-use automated-vehicle is provided. The system includes a digital-map, a location-detector, and a controller. The digital-map characterizes roadways on the digital-map with a usage-rating. The usage-rating is indicative of a minimum-value of a vehicle-rating of a vehicle allowed to use each of the roadways. The location-detector indicates a location of a host-vehicle on the digital-map. The controller is in communication with the digital-map and the location-detector. The controller receives a destination of the host-vehicle, and determines a route from the location to the destination that avoids roadways with usage-ratings greater than the vehicle-rating of the host-vehicle.

The usage-rating may be based on a speed-limit of the roadway, and the route avoids roadways where the speed-limit is greater than a speed-threshold of the host-vehicle. The route may cross roadways characterized by a speed-limit greater than the speed-threshold only where a traffic-control-device is present that momentarily stops cross-traffic of the roadway.

The usage-rating may be based on a time-of-day, and the route avoids a roadway when usage-rating of the roadway is greater than the vehicle-rating of the host-vehicle.

The usage-rating of a roadway may be determined dynamically based on information from a road-sensor, and the route avoids a roadway when the usage-rating of the roadway is greater than the vehicle-rating of the host-vehicle.

The usage-rating may be based on a vertical-slope of a roadway, and the route avoids the roadway when the vertical-slope is greater than a slope-threshold of the host-vehicle.

The usage-rating may be based on a maximum-weight of vehicles allowed to operate on a roadway, and the route avoids the roadway when the maximum-weight is greater than a weight-threshold of the host-vehicle.

The usage-rating may be based on an accident-history of a roadway, and the route avoids the roadway when the accident-history of the roadway is greater than an accident-threshold of the host-vehicle.

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:
Fig. 1 is a diagram of a navigation system in accordance with one embodiment; and
Fig. 2 is a representative illustration of a digital-map used by the system of Fig. 1 in accordance with one embodiment.

### DETAILED DESCRIPTION

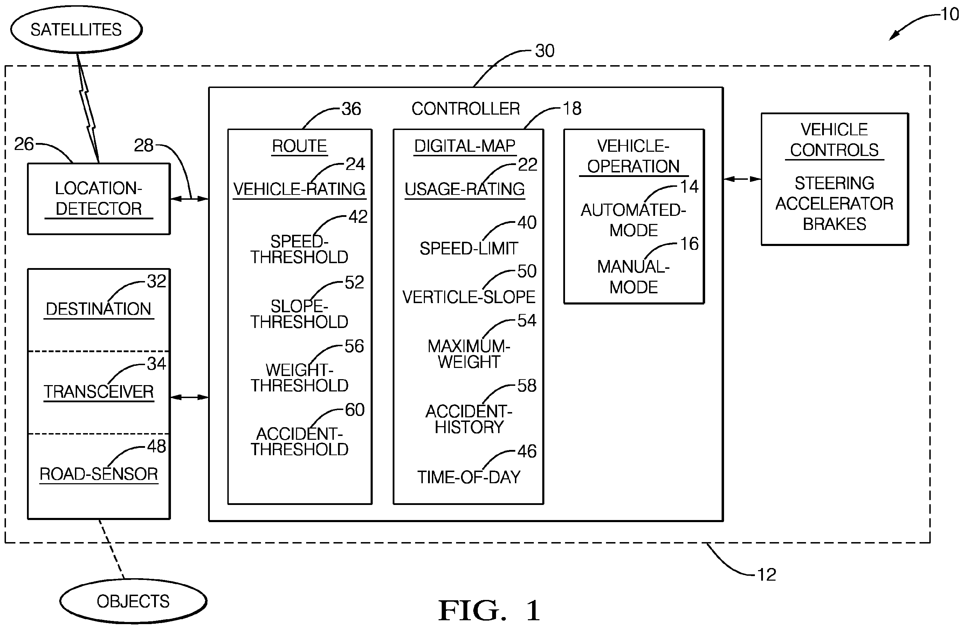

Fig. 1 illustrates a non-limiting example of a navigation system 10, hereafter referred to as the system 10. The system 10 is generally for use on a restricted-use automated-vehicle, e.g. an Automated Mobility on Demand (AMOD) vehicle, which is hereafter referred to as the host-vehicle 12. The term AMOD vehicle is often used to refer to relatively small, relatively slow speed taxies that are fully automated and operate in some cities around the world. However, it is not a requirement that the host-vehicle 12 be this sort of vehicle. As used herein, the term automated vehicle may apply to instances when the host-vehicle 12 is being operated in an automated-mode 14, i.e. a fully autonomous mode, where a human-operator (not shown) of the host-vehicle 12 may do little more than designate a destination in order to operate the host-vehicle 12. However, full automation is not a requirement. It is contemplated that the teachings presented herein are useful when the host-vehicle 12 is operated in a manual-mode 16 where the degree or level of automation may be little more than providing audible and/or visual route guidance to the human-operator who is generally in control of the steering, accelerator, and brakes of the host-vehicle 12. The host-vehicle 12 is characterized as a restricted-use vehicle meaning that there are some roadways on which the host-vehicle 12 is not legally allowed to travel. As will be described in more detail below, the system 10 described herein determines a route to a destination that avoids roadways that the host-vehicle 12 is not allowed to use.

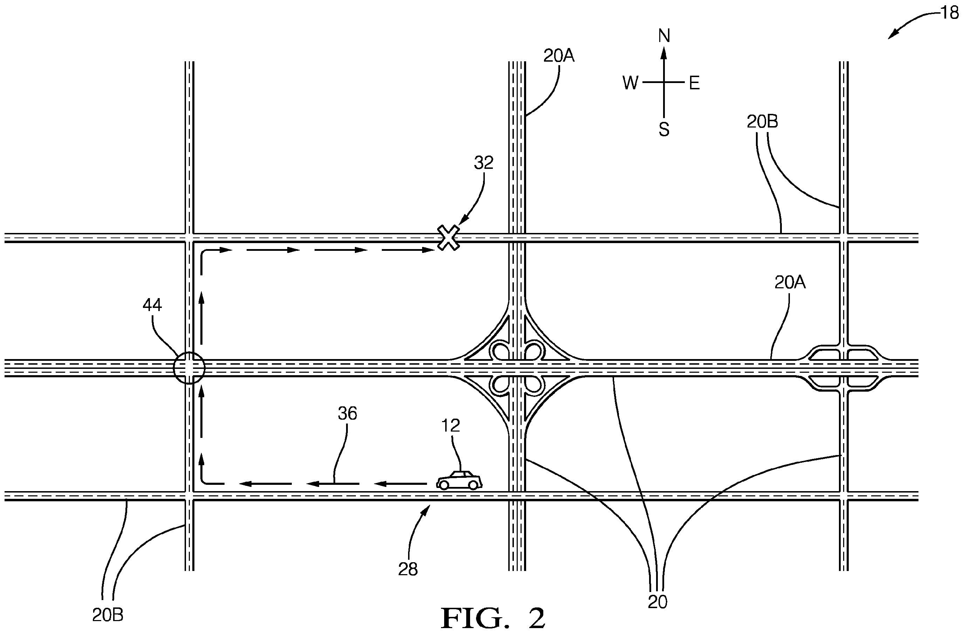

The system 10 includes a digital-map 18 (see also Fig. 2) that characterizes instances of roadways 20 on the digital-map 18 with a usage-rating 22. While Fig. 1 may be interpreted to suggest that the digital-map 18 is on-board the host-vehicle 12, this is not a requirement. It is contemplated that the digital-map 18 could reside "in the cloud" and be accessed or updated by the system 10 using, for example, wireless communications such as a cellular-phone network or Wi-Fi. As used herein, the usage-rating 22 refers to or is indicative of a minimum-value of a vehicle-rating 24 of any vehicle that is allowed to use a particular instance of the roadways 20. That is, for the host-vehicle 12 to be legally allowed to operate on a particular roadway, the vehicle-rating 24 of the host-vehicle 12 must be equal to or greater than the usage-rating 22 of the particular roadway selected for travel by the host-vehicle 12. Specific examples of operational limitations of the host-vehicle 12 that determine or limit the vehicle-rating 24 of the host-vehicle 12 will be provided later in this document.

The system 10 includes a location-detector 26 that indicates a location 28 of the host-vehicle 12 on the digital-map 18. The location-detector 26 may be a global-positioning-system (GPS) receiver that provides coordinates of the host-vehicle 12 based on signals received from satellites, as will be recognized by those in the art. Alternatively, it is contemplated that on-board sensors such as a camera (not shown) may be used 'read' street-signs and/or detect other unique features of the landscape around the host-vehicle 12 to determine the location 28 on the digital-map 18.

The system 10 includes a controller 30 in communication with the digital-map 18 and the location-detector 26. The communication may be by way of wires, fiber-optic cable, or wireless communication. The controller 30 may include a processor (not specifically shown) such as a microprocessor or other control circuitry such as analog and/or digital control circuitry including an application specific integrated circuit (ASIC) for processing data as should be evident to those in the art. The controller 30 may include memory (not specifically shown), including non-volatile memory, such as electrically erasable programmable read-only memory (EEPROM) for storing one or more routines, thresholds, and captured data. The one or more routines may be executed by the processor to perform steps for operating or providing navigation information based on signals received by the controller 30 as described herein.

To initiate travel by the host-vehicle, the controller 30 receives a destination 32 of the host-vehicle 12. The destination 32 may be entered by an occupant (not shown) of the host-vehicle 12 by, for example, using a touch-screen and/or voice commands. Alternatively, or in addition, the system 10 may include a transceiver 34 that receives the destination 32 from a remote dispatching center, or receives the destination from a smart-phone or other personal communication device operated by a present or future passenger of the host-vehicle 12. In order to operate the host-vehicle 12 in accordance with the operational limitations indicated by the vehicle-rating 24, the controller 30 is programmed or configured to determine a route 36 from the location 28 to the destination 32 that avoids instances of the roadways 20 that are characterized by or with a value of the usage-rating 22 that is greater than the vehicle-rating 24 of the host-vehicle 12. As such, the route 36 is not necessarily the shortest or fastest route from the location 28 to the destination as the shortest or fastest route may lead the host-vehicle onto an instance of the roadways 20 characterized by a value of the usage-rating 22 that is greater than the vehicle-rating 24 of the host-vehicle 12.

Fig. 2 illustrates a non-limiting example of the digital-map 18 that includes two instances of a primary-road 20A indicated by double-lines, and four instances of a surface-street 20B indicated by single-lines. In this non-limiting example, the usage-rating 22 of the primary-road 20A is generally such that a vehicle traveling the primary-road 20A should meet all vehicle safety-standards. By contrast, the usage-rating 22 of the surface-street 20B is generally such that a vehicle that did not meet all vehicle safety-standards could provide safe transportation as long as that vehicle stayed on the surface-street 20B and did not travel on the primary-road 20A. While the greater than test used to compare the usage-rating 22 to the vehicle-rating 24 suggests that each are numerical values, this is not a requirement. It is contemplated that the usage-rating 22 to the vehicle-rating 24 may be recorded/presented as a code or matrix of yes/no variables that are compared to determine if the host-vehicle 12 is authorized to use a particular instance of the roadways 20.

Continuing to refer to both Figs. 1 and 2, and by way of example and not limitation, the usage-rating 22 may be based on a speed-limit 40 of an instance of the roadways 20, and the route 36 is determined or selected to avoid instances of the roadways 20 where the speed-limit 40 is greater than a speed-threshold 42 of the host-vehicle 12. For example, if the primary-road 20A has a speed-limit of one-hundred-kilometers-per-hour (100kph), the surface-street 20B has a speed-limit of thirty-five-kilometers-per-hour (35kph), and the host-vehicle 12 has a vehicle-rating 24 that limits the maximum-speed of the host-vehicle to forty-five-kilometers-per-hour (45kph), then the route 36 may only use instances of the surface-street 20B be to travel to the destination 32. As shown in Fig. 2, even though a route to the destination 32 that used the north-south instance of the primary-road 20A would likely be both shorter and faster, the host-vehicle 12 must follow the route 36 to avoid traveling on a road with a value of the usage-rating 22 greater than the vehicle-rating 24 of the host-vehicle 12.

Optionally, the system 10, or more specifically the controller 30, may be configured to not allow the host-vehicle 12 to cross or traverse instances of the roadways 20 that have a value of the speed-limit 40 that is greater than the speed-threshold 42 of the host-vehicle 12. However, there may be an exception to that rule if a traffic-control-device 44 is present that momentarily stops cross-traffic of the roadway where the host-vehicle 12 is to cross. In Fig. 2 the presence of the traffic-control-device 44 allows the route 36 to cross the east-west instance of the primary-road 20A when cross-traffic on the primary-road 20A is stopped by the traffic-control-device 44. That is, the controller 30 selects the route 36 so that the route 36 crosses roadways characterized by a speed-limit 40 greater than the speed-threshold 42 only where a traffic-control-device 44 is present that momentarily stops cross-traffic of the roadway.

As another example, the system 10 may be configured so the usage-rating 22 is based on a time-of-day 46. For example, a particular instance of the roadways 20 may have a greater value of the usage-rating 22 during the typical early-morning and late-afternoon rush hours. Accordingly, the system 10 selects the route 36 so that the route 36 avoids a roadway when usage-rating 22 of the roadway is greater than the vehicle-rating 24 of the host-vehicle 12. Alternatively, the usage-rating 22 of a roadway may be determined dynamically based on information from a road-sensor 48. The road-sensor 48 may be a camera, radar, lidar, or any combination thereof. The road-sensor 48 may be mounted on the host-vehicle 12 as one interpretation of Fig. 1 may suggest. However, it is contemplated that all or part of the road-sensor 48 could be mounted remote from the host-vehicle 12 as part of an infrastructure of a traffic-control/monitoring-system, and the information could be communicated to the controller 30 via the transceiver 34. Accordingly, the route avoids a roadway when the usage-rating of the roadway is greater than the vehicle-rating of the host-vehicle.

As another example, the system 10 may be configured so the usage-rating 22 is based on a vertical-slope 50 of a roadway, and the route 36 avoids the roadway when the vertical-slope 50 is greater than a slope-threshold 52 of the host-vehicle 12. The slope-threshold 52 may be determined based on the maximum power of the engine of the host-vehicle 12, the present load being transported by the host-vehicle 12, expected road traction limitations due to the expected presence of ice or snow on the road, insufficient braking capability to handle the load or any combination thereof. That is, if the host-vehicle has insufficient power and/or traction and/or breaking to navigate a steep slope that is characterized by the vertical-slope 50 being greater than the slope-threshold 52, the controller 30 may select a different route.

As another example, the system 10 may be configured so the usage-rating 22 is based on a maximum-weight 54 of other vehicles allowed to operate on a roadway (i.e. on a particular instance of the roadways 20), and the route avoids that roadway when the maximum-weight 54 is greater than a weight-threshold 56 of the host-vehicle 12. For example, heavy trucks may be allowed only on certain roads, and the host-vehicle 12 may be much smaller than the heavy trucks, so traveling amongst those heavy trucks may not be the safest route for the host-vehicle 12 to travel.

As another example, the system 10 may be configured so the usage-rating 22 is based on an accident-history 58 of a roadway, and the route 36 avoids that roadway when the accident-history 58 of the roadway is greater than an accident-threshold 60 of the host-vehicle 12. For example, if a certain intersection or entrance/exit ramp has had an abnormally high number of accidents reported, especially accidents involving AMOD vehicles similar to the host-vehicle 12, the system 10 may alter the route 36 to avoid that intersection or entrance/exit ramp

Accordingly, a navigation system (the system 10), a controller 30 for the system 10, and a method of operating the system 10 is provided. The system 10 uses various types of information such as, but not limited to, the speed-limit 40, the accident-history 58, road curvature limits, and/or the present traffic-density on a particular section of a roadway to determine if travel on that roadway is relatively safe for the host-vehicle 12

While this invention has been described in terms of the preferred embodiments thereof, it is not intended to be so limited, but rather only to the extent set forth in the claims that follow.

## Claims

1. A navigation system (10) for a restricted-use automated-vehicle, said system (10) comprising:
a digital-map (18) that characterizes roadways (20) on the digital-map (18) with a usage-rating (22), wherein the usage-rating (22) is indicative of a minimum-value of a vehicle-rating (24) of a vehicle allowed to use each of the roadways (20);
a location-detector (26) that indicates a location (28) of a host-vehicle (12) on the digital-map (18); and
a controller (30) in communication with the digital-map (18) and the location-detector (26), said controller (30) receives a destination (32) of the host-vehicle (12), and determines a route (36) from the location (28) to the destination (32) that avoids roadways (20) with usage-ratings greater than the vehicle-rating (24) of the host-vehicle (12).

2. The system (10) in accordance with claim 1, wherein the usage-rating (22) is based on a speed-limit (40) of the roadway, and the route (36) avoids roadways (20) where the speed-limit (40) is greater than a speed-threshold (42) of the host-vehicle (12).

3. The system (10) in accordance with claim 2, wherein the route (36) crosses roadways (20) **characterized by** a speed-limit (40) greater than the speed-threshold (42) only where a traffic-control-device (44) is present that momentarily stops cross-traffic of the roadway.

4. The system (10) in accordance with claim 1, wherein the usage-rating (22) is based on a time-of-day (46), and the route (36) avoids a roadway when usage-rating (22) of the roadway is greater than the vehicle-rating (24) of the host-vehicle (12).

5. The system (10) in accordance with claim 1, wherein the usage-rating (22) of a roadway is determined dynamically based on information from a road-sensor (48), and the route (36) avoids a roadway when the usage-rating (22) of the roadway is greater than the vehicle-rating (24) of the host-vehicle (12).

6. The system (10) in accordance with claim 1, wherein the usage-rating (22) is based on a vertical-slope (50) of a roadway, and the route (36) avoids the roadway when the vertical-slope (50) is greater than a slope-threshold (52) of the host-vehicle (12).

7. The system (10) in accordance with claim 1, wherein the usage-rating (22) is based on a maximum-weight (54) of vehicles allowed to operate on a roadway, and the route (36) avoids the roadway when the maximum-weight (54) is greater than a weight-threshold (56) of the host-vehicle (12).

8. The system (10) in accordance with claim 1, wherein the usage-rating (22) is based on an accident-history (58) of a roadway, and the route (36) avoids the roadway when the accident-history (58) of the roadway is greater than an accident-threshold (60) of the host-vehicle (12).
